# EUROPEAN PATENT APPLICATION

(11) **EP 2 770 486 A2**
(43) Date of publication of application: **27.08.2014**
(21) Application number: 14155986.4
(22) Date of filing: 20.02.2014
(51) Int. Cl.: G08B 13/08

(54) **Sensing device**

(30) Priority: 21.02.2013 GB 201303090
(71) Applicant: Read, Dale, Stanford-le-hope, Essex SS17 8HH (GB)
(72) Inventor: Read, Dale, Stanford-le-hope, Essex SS17 8HH (GB)
(74) Representative: Knights, Rupert

(57) **Abstract**

An energy usage monitoring system, comprising at least one sensing device operatively connected to a building visualization/control unit, the at least one sensing device being arranged for attachment to a window or door and comprising a sensor, which is arranged to sense whether the window or door is open or closed and to sense the degree of opening of the window or door, and wireless communication means for transmitting a signal dependent on the sensor output, wherein the sensor comprises an accelerometer and/or a gyroscope.

## Description

The present disclosure relates to a sensing device, to a window or door comprising the sensing device, and to an automated monitoring system comprising a plurality of sensing devices.

With increased fuel costs, and a heightened awareness of the environmental impact of the inefficient use of resources, there is an increasing need for effective energy monitoring and control systems with continuous monitoring of effective energy efficiency.

It is not uncommon in buildings, such as schools or offices, for radiators to remain on in a room irrespective of the temperature or occupied status of that room. For example, the heating may remain on in a classroom in which the windows have been opened to balance the temperature of the room and/or which is unoccupied.

The present invention arose in a bid to provide an apparatus for automatically and accurately monitoring energy usage/wastage and maximizing efficiency.

According to the present invention in a first aspect, there is provided an energy usage monitoring system, comprising at least one sensing device operatively connected to a building visualization and/or control unit, the at least one sensing device being arranged for attachment to a window or door and comprising a sensor, which is arranged to sense whether the window or door is open or closed and to sense the degree of opening of the window or door, and wireless communication means for transmitting a signal dependent on the sensor output, wherein the sensor comprises an accelerometer and/or a gyroscope.

The sensor may comprise an inertial measurement unit (IMU), which comprises both an accelerometer and a gyroscope. The sensing device may comprise, in addition to the sensor, one or more further sensors that are arranged to monitor the ambient environment. There is preferably a plurality of the sensing devices provided.

Further, preferred, features are recited in the dependent claims.

In a further aspect, there is provided a sensing device for attachment to a window or door, the sensing device comprising a sensor, which is arranged to sense whether the window or door is open or closed, and wireless communication means for transmitting a signal dependent on the sensor output. The sensor is preferably arranged to sense the degree of opening of the window or door. The sensor may comprise an accelerometer, which may be a three axis accelerometer. It may alternatively comprise a gyroscope. It may comprise both an accelerometer and a gyroscope. It may comprise an IMU. The sensing device may comprise, in addition to the sensor, one or more further sensors that are arranged to monitor the ambient environment.

According to the present invention in yet further aspects, there may be provided a sensing device attached to a window or door; or a window or door comprising an inbuilt sensing device.

Non-limiting embodiments will now be described, by way of example only, with reference to the accompanying drawings, in which:
Figure 1 shows a perspective view of a sensing device according to the present invention;
Figure 2 shows the sensing device of Figure 1 attached to a window frame; and
Figure 3 shows a schematic representation of a building visualization and control system incorporating a plurality of sensing devices according to the present invention.

According to a first arrangement, there is provided a sensing device 1 for attachment to a window or door. The sensing device comprises an IMU, which comprises a three-axis accelerometer in combination with a three-axis gyroscope, and which is configured to sense whether the window or door is open or closed and to further sense the degree of opening of the window or door, and wireless communication means for transmitting a signal dependent on the sensor output. The gyroscope may detect the tilt of the window or door and the accelerometer may detect the rate of rotation. The sensor further comprises a light sensor, which is configured to sense the lighting level of the room in which the door or window is installed, a first temperature sensor, which is arranged to sense the temperature of the air flow through the window or door, and a second temperature sensor, which is arranged to sense the temperature of the room in which the window or door is installed. The outputs from the first and second temperature sensors may be combined and processed to provide desired temperature information.

It should be appreciated that in alternative arrangements only an accelerometer may be provided or an accelerometer or gyroscope may be provided with one or more (but not all) of the further sensors also provided.

An exemplary suitable IMU, which comprises an accelerometer combined with a gyroscope, is an MPU6050 from InvenSense^{®}. The light sensor is preferably a light dependent resistor (LDR) or a Lux sensor, which is arranged to sense luminosity, and is arranged such that it faces inwardly to the room when the sensing device is installed. The first temperature sensor preferably comprises a thermistor and the second temperature sensor preferably comprises a thermopile. The first and second temperature sensors may be combined in a single package. A suitable package comprises a ZTP-135 sensor from GE^{®}.

It should be appreciated that in further alternative arrangements alternative/additional sensors may be utilised. As an example, a movement/occupancy sensor may be further included, which may comprise a passive infra red (PIR) sensor, an example of which is an IRA-E700STO.

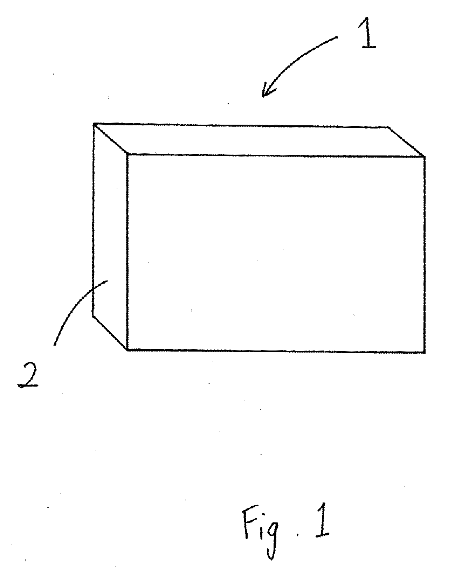

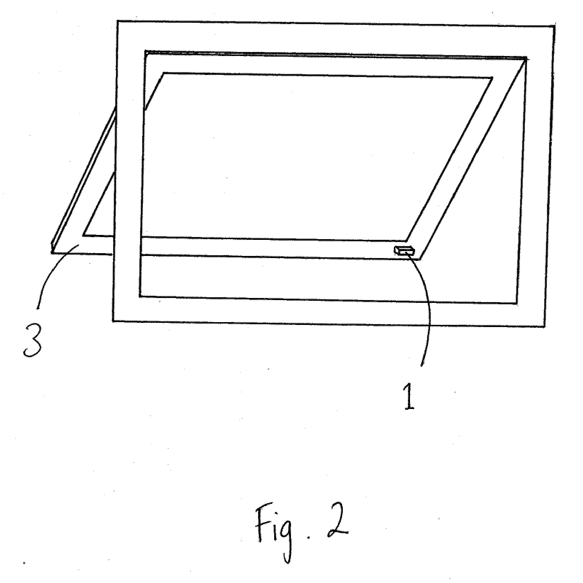

The sensors that combine to form the sensing device are housed in a self contained housing, which may comprise a substantially box-like housing 2 as shown in Figure 1. The housing is suitable for mounting to a window frame/pane or to a door. The housing is shown mounted to a window frame 3 in Figure 2. The housing is preferably 30mm x 30mm x 10mm or smaller. The housing is preferably provided with suitable attachment means (not shown) for attaching it to any such desired structure or surface. The attachment means may comprise screw holes, adhesive pads, etc. Some form of adhesive attachment means is preferable, since it allows for easy mounting to any suitable part of an existing window or door. The attachment means is preferably provided on the opposite side of the sensing device to the light sensor. As an alternative, the sensing device will be installed when the window unit or door is manufactured.

The housing includes the necessary circuitry for any sensors that are present, a power source, a microprocessor and communications circuitry, which comprises a radio, for providing a wireless link with an external device, such as but not limited to a data gathering unit/central control unit of a monitoring system or a controller of a heating system. The power source preferably comprises one or more batteries and/or a solar cell, as an energy harvester. It is preferred that both a battery and solar cell are provided, wherein the solar cell is configured to re-charge the battery.

It is possible, in alternative arrangements, that windows or doors may be provided with the sensing device inbuilt, in which case the housing will be omitted or re-configured as appropriate.

The microprocessor within the sensing device is arranged to run software and to thereby control the sensing device. It processes the data received from the accelerometer, the light sensor and the temperature sensors to generate a signal for transmission using the communication circuitry.

The sensing device is an ultra-low power device. The microprocessor is configured such that the sensing device is normally switched off. Under control of the microprocessor, the sensing device will switch on ("wake") intermittently and for a predetermined period of time when a change is detected by the accelerometer and/or when a change is detected by any of the other sensors. The sensing device may additionally be configured to switch on for a predetermined period of time that is shorter than an intermittent period during which it is switched off. The sensing device may, for example, switch on and remain on for a single 5 millisecond period per half an hour in addition to the periods for which it is switched on when a change in status is sensed. Additionally, the sensor can be woken up upon rapid input changes.

When switched on, the sensing device will process the signals from the sensors. The software is capable of receiving the data sensed by each of the sensors and providing a signal for transmission.

The software is preferably further configured to monitor the operational and battery statuses of the sensing device and to control the radio frequency (RF) functionality of the sensing device. Under the control of the software, the sensing device will preferably transmit a signal to a data gathering unit only when a change of status occurs (i.e. only when a change in the signal from the accelerometer and/or any of the other sensors is detected).

The steps of switching the sensing device on and off and only transmitting a wireless signal when there is a change of status each assist in significantly extending the battery life of the sensing device. Moreover, with the provision of a solar cell it is possible to provide a re-charge function, as mentioned, plus energy harvesting.

Any number of the sensing devices may be provided which are operatively linked to one or more data gathering/control units that are provided to receive/log/process data received from the sensing devices, and which together with the sensing devices form an automated energy usage monitoring/control system.

The sensing devices are each preferably linked to one of the data gathering/control units by the communications circuitry through a low power wireless network (iLan). Most preferably, each sensing device is provided with a low power microprocessor unit that provides communication at a frequency of 315, 433, 868 or 915 MHz, 2.4Ghz or other.

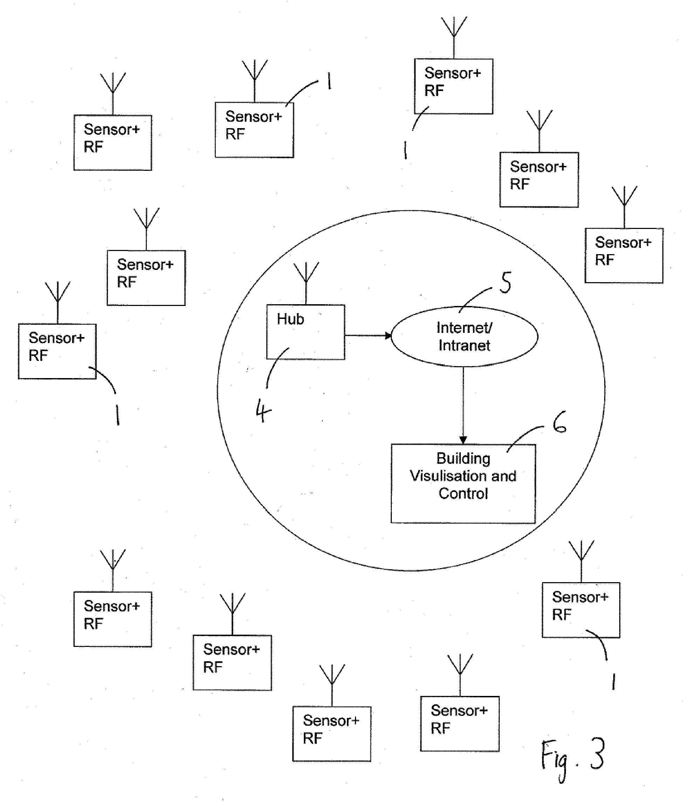

With reference to Figure 3, there is shown an exemplary network of sensing devices 1 that are all in wireless communication with a hub 4 that is connected through a wired or wireless connection 5 to a building visualization and/or control device 6, which may comprise a PC or similar. It should be noted that more or less sensing devices may be provided and additional hubs may be provided. The arrangement shown is not intended to be limiting and alternative configurations will be readily appreciated by those skilled in the art.

The system may comprise a plurality of sensing devices as described herein and an additional plurality of sensing devices that are mounted to the walls of the building that is being monitored, the additional sensing devices being mounted in corridors, rooms, or otherwise, wherein the sensing devices mounted to the walls need not feature the sensor(s) for detecting opening or closing. Such additional sensing devices comprising any combination of the other sensors mentioned herein, including temperature and light sensors.

As discussed, in alternative arrangements, the sensing devices may wirelessly communicate directly with the controller of a heating system, here the hub of Figure 3 may communicate with the heating controller rather than the building visualization and control device.

With a network of sensing devices linked to a central building visualization and/or control device, it will be possible to build an accurate picture of energy usage/wastage, by building one or more of a heat map, an occupancy map and a window map of a building, each of which may be used in isolation or in combination to build an effective picture of energy usage/wastage. This information may be used to balance a building and to ensure an efficient use of energy. It may further be used to ensure that buildings continue to operate to their maximum efficiency. Either manual or automatic localized heating control may be implemented in accordance with the information obtained using the sensing devices. The building visualization and/or control device may be used to control further systems or apparatuses, as will be readily appreciated by those skilled in the art.

The sensing device detailed above and a system incorporating a plurality of the sensing devices provides a powerful tool for balancing buildings and maximizing efficiency.

## Claims

1. An energy usage monitoring/control system, comprising at least one sensing device operatively connected to a building visualization and/or control unit, the at least one sensing device being arranged for attachment to a window or door and comprising a sensor, which is arranged to sense whether the window or door is open or closed and to sense the degree of opening of the window or door, and wireless communication means for transmitting a signal dependent on the sensor output, wherein the sensor comprises an accelerometer and/or a gyroscope.

2. A system as claimed in Claim 1, wherein the sensor is an inertial measurement unit, which comprises the gyroscope and the accelerometer.

3. A system as claimed in Claim 1 or 2, wherein the sensing device further comprises a light sensor arranged to sense the lighting level of a room in which the window or door is installed.

4. A system as claimed in any preceding claim, wherein the sensing device further comprises one or more temperature sensors, which comprise a sensor arranged to sense the temperature of the air flow through the window or door and/or a sensor arranged to sense the temperature of a room in which the window or door is installed.

5. A system as claimed in any preceding claim, wherein the sensing device is configured such that it is ordinarily switched off, switching on for a predetermined period of time when a change is detected by the sensor(s) and/or switching on intermittently for a predetermined period of time, which is shorter than the intermittent period during which it is switched off, to monitor the signals sensed by the sensor(s).

6. A system as claimed in any preceding claim, wherein the sensing device is configured to wirelessly transmit a signal only when a change is detected by the sensor.

7. A system as claimed in any preceding claim, wherein the sensing device is configured to wirelessly transmit a signal when a change is detected by any of the sensors.

8. A system as claimed in any preceding claim, wherein the sensing device comprises a microprocessor, which is arranged to run a software package for controlling the operation of the sensing device.

9. A system as claimed in any preceding claim, wherein all of the components of the sensing device are housed together in a self-contained housing.

10. A system as claimed in any preceding claim, wherein the sensing device comprises a battery and/or solar power source.

11. A system as claimed in any preceding claim, wherein the sensing device comprises attachment means for attaching the sensing device to the window or door.

12. A system as claimed in Claim 12, wherein the attachment means comprises an adhesive.

13. A system as claimed in any preceding claim, wherein the building visualization and/or control unit forms part of a heating system.

14. A system as claimed in Claim 13, wherein the control unit is arranged to control the heating system in dependence on signals received from the sensing device(s).
